# EUROPEAN PATENT SPECIFICATION

(11) **EP 3 851 403 B1**
(45) Date of publication and mention of the grant of the patent: **28.09.2022**
(21) Application number: 20151934.5
(22) Date of filing: 15.01.2020
(51) Int. Cl.: B66B 23/10, B66B 23/12

(54) **SUPPORT MEMBER FOR A DRIVE BELT OF A PASSENGER CONVEYOR**
STÜTZELEMENT FÜR EINEN ANTRIEBSRIEMEN EINES PERSONENFÖRDERERS
ELEMENT DE SUPPORT D'UNE COURROIE D'ENTRAÎNEMENT POUR TRANSPORTEUR DE PERSONNES

(43) Date of publication of application: 21.07.2021
(73) Proprietor: Otis Elevator Company, Farmington, Connecticut 06032 (US)
(72) Inventor: TUREK, Alexander, 2482 Münchendorf (AT); ILLEDITS, Thomas, 2491 Neufeld an der Leitha (AT)
(74) Representative: Dehns

(56) References cited:
- EP-A1- 3 257 804
- EP-A1- 3 511 282

## Description

### Technical field

This disclosure relates to drive belts for passenger conveyors, such as escalators or moving walkways.

### Background

Conventional passenger conveyors, such as escalators and moving walkways, generally comprise a transportation band, on which passengers stand, which is propelled by a drive system to convey the passengers from one place to another place, for example between floors of a building or along extended distances.

The transportation band is formed by a plurality of conveyance elements, such as steps or pallets, which are drivingly coupled to at least one drive member, such as a drive belt, which drives the conveyance elements.

Drive belts are generally toothed belts, also known as cogged belts or synchronous belts. Drive belts generally comprise a flexible belt including a load bearing portion in which at least one longitudinally extending cord is embedded. On one side of the drive belt is an engagement structure formed of teeth, which extend perpendicularly to the drive direction and which generally span the width of the drive belt.

Industry standards define minimum belt breaking strength requirements for passenger conveyors. With conventional arrangements, the drive belts must be wide enough to accommodate a sufficient number of cords to provide the required minimum belt breaking strength. Alternatively, a drive strand comprising two or more drive belts can be provided. The belt breaking strength of the drive strand is the sum of the belt breaking strength of each drive belt in the drive strand. Therefore, the drive belts making up the drive strand are selected to achieve the overall required belt breaking strength.

The conventional arrangement for coupling a conveyance element to the drive belt is to provide one or more through-holes in the drive belt, through which one or more coupling elements are inserted which mate with corresponding coupling element(s) on the conveyance element. When the conveyance element is mounted onto a drive strand, it must be secured to each drive belt of the drive strand, which means that at least one through-hole is required in each drive belt. The through-holes in the drive belt can only be made in sections of belt in which no cords are located. In order to do this, across its width, the drive belt must include cordless portions in which no cords are provided. This means that the drive belt must be wide enough to incorporate the necessary number of embedded cords and cordless portions for the through-holes.

Therefore, there is a need to improve the coupling of the conveyance elements to the drive element for passenger conveyors.

EP 3 257 804 A1 describes a people conveyor comprising at least one belt extending in a longitudinal conveying direction, a plurality of webs attached to the belt and a plurality of transportation elements.

EP 3 511 282 A1 describes a moving walkway comprising at least one endless belt moving in a conveyance direction along a closed loop.

### Summary

According to a first aspect of the invention, there is provided a support member for a drive belt as claimed in claim 1.

Since the support member is configured to extend across the entire width of the drive belt, in use it provides structural support to the drive belt across its entire width and in particular to the tooth in which the support member is inserted. The support member provides structural support to the drive belt in use, in particular during the bending of the drive belt as it moves around turning points at either end of the passenger conveyor.

The support member is secured at either ends of the support member by the coupling elements engaging with the corresponding coupling elements. This means that the support member is clamped over the drive belt(s), in other words it provides a clamping action provided at either side of the drive belt. With this clamping action securing the drive belt(s) to the conveyance elements, no through holes are required in the drive belt(s). Therefore, the cords can be embedded across the entire width of the drive belt. This means that the drive belt(s) have a smaller width than conventional drive belts which include cordless portions with through-holes in order to attach the conveyance elements. This provides a more cost effective solution for a given belt breaking strength requirement.

This is particularly advantageous for jointed drive belts, since jointed belts have additional areas of weakness at the belt joint. The clamping action of the support member provided at the belt joint can act as a secondary mechanism for holding the two ends of the jointed belt together. Therefore, the support member provides a more secure belt joint, and redundancy in case of weld failure.

Alternatively, the support member can be used as the sole mechanism for holding the two ends of the jointed belt together. In this case, the installation of the jointed belt into the passenger conveyor is easier since no belt joint welding is required in the restricted working environment of the passenger conveyor truss.

Since the or each engagement portion has a length corresponding to width of the respective drive belt, the respective drive belt is held tightly and restrained against lateral displacement.

The or each engagement portion may have a profile configured for a form-fit engagement with the respective recess.

Each recess may include at least one protrusion provided on a side wall which engages in a press fit manner with a side wall of the respective engagement portion. The or each engagement portion of the support member may include at least one protrusion provided on a side wall which engages in a press fit manner with a side wall of the respective recess. The at least one protrusion provided may engage with a corresponding indent in the side wall.

The or each engagement portion may have a proximal width which is wider than its distal width. The recess may have a corresponding profile. The recess may be wider at its deepest point, compared to the outer part of the recess. In other words it may have a narrower opening at the outer portion of the drive belt tooth. The engagement portion(s) may have a corresponding profile. The or each engagement portion may have a trapezoidal cross-section. The or each recess may have a corresponding trapezoidal cross-section for receiving a respective engagement portion.

The support member may comprise at least two engagement portions. A coupling element may be provided between the engagement portion(s).

The support member may have two engagement portions. Two outer coupling portions may be provided at each end of the support member. A central coupling portion may be provided between the two engagement portions. A coupling element may be provided in each outer coupling portion and the central coupling portion. The central coupling portion may have a cross-sectional area that is larger than the cross-sectional area of the two engagement portions.

The support member may have three engagement portions. Two outer coupling portions may be provided at each end of the support member. A central coupling portion may be provided between each pair of engagement portions. A coupling element may be provided in each outer coupling portion and the two central coupling portions. The two central coupling portions may have a cross-sectional area that is larger than the cross-sectional area of the three engagement portions.

According to a further aspect of this invention, there is provided a drive belt for a passenger conveyor comprising: a plurality of teeth extending across a width of the drive belt; a plurality of recesses, wherein the or each recess is provided in a tooth extending across the entire width of the drive belt, wherein the or each recess is configured to receive an engagement portion of the support member as described above.

The endless belt may include at least one longitudinally extending cord embedded and extended longitudinally within it. The endless belt may include a plurality of longitudinally extending cords embedded across a width of the belt.

The drive belt may be formed as an endless extruded belt. The drive belt may be formed as a jointed drive belt having a belt joint. The belt joint may comprise a region in which portions of first and second ends of the drive belt overlap. At least one recess may be provided in the region of the belt joint. A plurality of recesses may be provided in the region of the belt joint. The jointed drive belt may include a welded belt joint.

When two or more jointed drive belts are provided in a drive strand, the belt joints within a drive strand (which are also points of weakness with fewer embedded cords) can be offset with respect to each other. A plurality of jointed drive belts may be provided. The plurality of jointed belts may have offset belt joints. In other words, the belt joints of each belt is offset with respect to the joint belts of the other drive belts.

There may be n belts provided, and the joint offset may be approximately 360°/n. The belt joints may be spaced equidistantly from each other. Three jointed drive belts may be provided, wherein the belt joints of the three belts are offset. The joint offset may be approximately 120°. At least one recess may be provided in the region of each belt joint. A plurality of recesses may be provided in the region of each belt joint.

The or each recess may include a contact surface. The contact surface may interface with a proximal surface of the respective engagement portion.

Each recess may have a profile which is configured to receive the engagement portion in form-fit engagement. The form-fit engagement between the components restricts relative movement of the support members with respect to the drive belt, since the recess holds the support member in place.

The or each recess may include at least one protrusion provided on a side wall which engages in a press fit manner with a side wall of the respective engagement portion. The or each engagement portion of the support member may include at least one protrusion provided on a side wall which engages in a press fit manner with a side wall of the respective recess. The or each engagement portion may have a proximal width which is wider than its distal width. Each recess may have an inner width which is wider than its outer width. The or each engagement portion may have a trapezoidal cross-section. The or each recess may have a corresponding trapezoidal cross-section for receiving a respective engagement portion.

The recesses may be evenly spaced along the length of the drive or each drive belt. The recesses may be spaced to align with horizontal members of the conveyance elements.

According to a further aspect of the present invention, there is provided a passenger conveyor comprising at least one drive belt as described above, and a plurality of support members as described above, wherein a conveyance element is coupled to each support member with each coupling element engaging with a respective corresponding coupling element.

Each conveyance element is coupled to a respective support member, thereby clamping at least one drive belt between the conveyance element and the respective support member.

Each support member may be coupled to a horizontal member of a conveyance element.

Each horizontal member is coupled to a respective support member, thereby clamping at least one drive belt between the horizontal and the respective support member.

The or each conveyance element may include two horizontal members, which are each coupled to a support member. The or each conveyance element may include a front horizontal member and at least one rear horizontal member, the front horizontal member and the or each rear horizontal member coupled to a support member.

The coupling elements may be screw threaded holes, and the corresponding coupling elements may be screws.

The coupling elements may be through holes, and the corresponding coupling elements may be protrusions configured for a form-fit engagement with the through holes. The corresponding coupling elements may be integral with the horizontal members of the conveyance elements. The corresponding coupling elements may be discrete components, configured for engagement with both a horizontal member of a conveyance element and a respective support member. The corresponding coupling elements may be elongate protrusions with bayonet fittings to engage with corresponding fittings (i.e. coupling portions) on the support member.

The passenger conveyor may comprise two or more drive belts. The passenger conveyor may comprise a plurality of support members, each having two or more engagement portions.

The passenger conveyor may comprise two drive strands. Each drive strand may comprise two or more drive belts. Each drive strand may comprise two drive belts. Each drive strand may comprise three drive belts. Each drive strand may comprise four or more drive belts. Each drive strand may comprise one or more linear track timing belts. Each drive strand may comprise three drive belts, wherein the central drive belt is a linear track timing belt.

The or each drive belt may be formed of a single endless extruded body. Each drive belt may be a jointed drive belt with a belt joint. The belt joint may comprise an overlap region, where the portions of the two ends of the drive belt overlap. The belt joints of the two or more drive belts may be offset from each other. A plurality of jointed drive belts may be provided. The plurality of jointed belts may have offset belt joints. There may be n belts provided, and the joint offset may be approximately 360°/n. Three jointed drive belts may be provided with a joint offset. The joint off set may be approximately 120°. The belt joints may be spaced equidistant from each other.

At least one recess may be provided in an overlap area of the or each belt joint. A plurality of recesses may be provided in the overlap area of the or each belt joint. At least one support member may be provided in the area of the or each belt joint. At least one belt joint may comprise a welded joint. The or each belt joint may be secured by at least one support member.

The passenger conveyor may further comprise a drive pulley. The drive pulley may include at least one outer flange. The or each outer flange may include a plurality of notches configured to engage, in use, with outer coupling portions of the support members. The notches may act to guide the drive belt(s) and align the drive belt(s) on the pulley.

The passenger conveyor may include a drive pulley. The drive pulley may include a groove, which engages in use with a linear track timing belt.

The passenger conveyor may be an escalator, and the conveyance elements may be steps. Each step may include a front horizontal member and at least one rear horizontal member. Each step may include two rear horizontal members. The front horizontal member may be coupled to a support member, thereby clamping at least one drive belt between the front horizontal member and the support member. The or each rear horizontal member may be coupled to a support member, thereby clamping at least one drive belt between the or each rear horizontal member and the support member.

Features described in relation to the first aspect of the present invention may of course also be applied to the further aspects, and vice versa. In general, features of any example described herein may be applied wherever appropriate to any other example described herein within the scope of the appended claims.

Where reference is made to different examples or sets of examples, it should be understood that these are not necessarily distinct but may overlap.

### Detailed description

Certain examples of the present invention will now be described, by way of example only, and with reference to the accompanying drawings, in which:
Figure 1 shows a passenger conveyor in the form of an escalator according to an example of the present invention;
Figure 2 shows a passenger conveyor in the form of a moving walkway according to an example of the present invention;
Figure 3a shows a cross-sectional view of a portion of a drive belt according to an example of the present invention;
Figure 3b shows a schematic view of a drive belt joint according to an example of the present invention;
Figure 3c shows a schematic view of a pair of drive strands according to an example of the present invention;
Figure 4 shows a conveyance element according to an example of the present invention;
Figure 5 shows a conveyance element coupled to a pair of drive belts in accordance with an example of the present invention;
Figure 6 shows a close-up partial view of Figure 5; Figures 7 shows one of the support members of Figure 5;
Figures 8a and 8b show alternative partial representations of Figure 5;
Figure 9 shows a conveyance element coupled to a pair of drive strands in accordance with an example of the present invention;
Figure 10 shows a close-up partial view of Figure 9; Figure 11 shows one of the support members of Figure 9;
Figure 12 shows a drive pulley for use with the arrangement shown in Figure 9;
Figure 13 shows a drive strand in accordance with another example of the present invention;
Figures 14a and 14b show one of the support members of Figure 13;
Figures 15a and 15b show a drive strand and support members in accordance with another example of the present invention;
Figure 15c shows a drive pulley for use with the arrangement shown in Figures 15a and 15b;
Figure 16 shows a conveyance element coupled to a pair of drive strands in accordance with another example of the present invention;
Figure 17 shows a partial close-up view of Figure 16; .
Figures 18a and 18b show a conveyance element coupled to a support member in accordance with another example of the present invention;
Figure 18c shows a cross-sectional view through a drive belt and a support member according an example of the present invention; and
Figures 19a and 19b show alternative form-fit configurations for a support member and a drive belt.

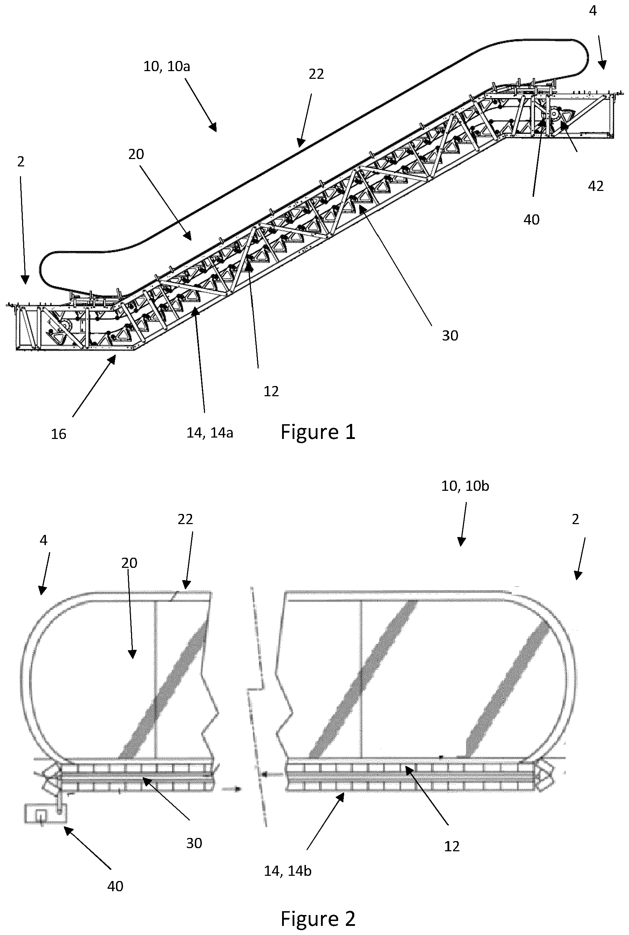

Figure 1 shows a passenger conveyor 10, represented in this figure as an escalator 10a, on which passengers are transported on a transportation band 12 between a first landing region 2 and a second landing region 4. A truss 16 extends between the first landing region 2 (also referred to as a lower landing region) and the second landing region 4 (also referred to as an upper landing region). Balustrades 20 which each support a moving handrail 22 extend along each side of the passenger conveyor 10.

The transportation band 12 of the escalator 10a is formed of a plurality of conveyance elements 14 (escalator steps 14a). The plurality of escalator steps 14a are mounted on one or more drive belts 30. The or each drive belt 30 engages with and is driven by a drive system 40, provided in the second landing region 4. The drive system 40 includes at least one drive pulley 42 which engages with and drives the one or more drive belts 30.

Figure 2 shows a passenger conveyor 10, represented in this figure as a moving walkway 10b, which transports passengers between a first landing region 2 and a second landing region 4. Balustrades 20 which each support a moving handrail 22 extend along each side of the passenger conveyor 10. In this example the moving walkway 10b transports passengers across a substantially horizontal distance. However, it will be appreciated that moving walkways can also transport passengers along an incline.

The moving walkway 10b includes a transportation band 12 which comprises a plurality of conveyance elements 14 in the form of pallets 14b. The plurality of pallets 14b are mounted on one or more drive belts 30 which is/are driven by a drive system 40.

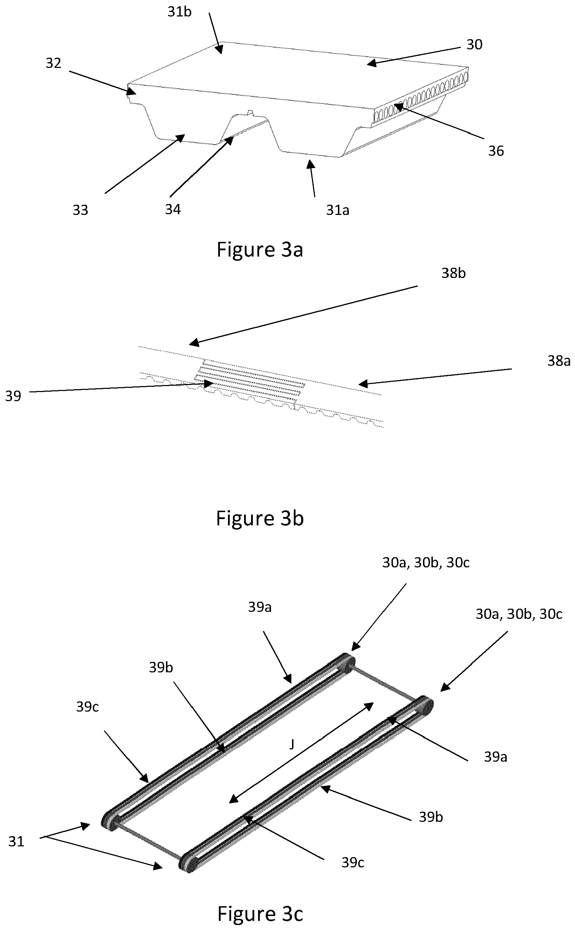

As shown in Figure 3a, the drive belt 30 comprises an endless belt 32 having alternating teeth 33 and grooves 34 which form an engagement surface 31a. An opposing surface 31b is also depicted. One or more embedded steel cords 36 extend longitudinally within the endless belt 32. A drive belt 30 can be formed as a single endless extruded body. One alternative is to provide a drive belt 30 which is formed from a section of belt having a first end 38a and a second end 38b. The first and second ends 38a, 38b are joined together, for example with a welded together, at a joint 39 (as shown in Figure 3b) to form an endless belt. The belt joint 39 of the jointed drive belts 30 is a region in which portions of the first and second ends 38a, 38b of the drive belts overlap, and the overlapping portions are welded together. This type of drive belt can also be called a jointed drive belt.

Figure 3c shows a common arrangement for a passenger conveyor with two drive strands31, each drive strand 31 comprising three jointed drive belts 30a, 30b, 30c, each belt having a belt joint 39a, 39b, 39c. The belt joints 39a, 39b, 39c of the jointed drive belts 30a, 30b, 30c within each drive strand 31 are offset with respect to each other. In an advantageous arrangement for this three belt drive strand 31, a joint offset of 120° is used, such that they are equidistant from each other. In other words a spacing between the joints J is equal to one third of the total length of a jointed drive belt 30a, 30b, 30c.

In another example (not shown in the figures), a drive strand is provided with two drive belts having an optimum joint offset of 180°. In a further example (not shown in the figures), a drive strand is provided with four drive belts having an optimum joint off set of 90°. It will be appreciated that a drive strand may include any number of drive belts n each drive belt having a belt joint, and advantageously the joint offset is 360°/n.

The examples described above shows belt joints which are formed by welding overlapping portions of the two ends of the drive belts. However, it will be appreciated that belt joints can formed by fusing or coupling the two ends of the drive belt in any other known way.

Figure 4 shows a conveyance element 14 in the form of a step 14a for an escalator 10a. The step 14a includes a step body 50 having a passenger carrying surface 51. The step 14a also includes a front horizontal member 52, provided at a forward end 50f of the step body 50. The front horizontal member 52 extends substantially across a width of the step 14a. Two rear horizontal members 54 are provided at a rear end 50r of the step body 50. The two rear horizontal elements are spaced from the front horizontal element 52 by a distance a.

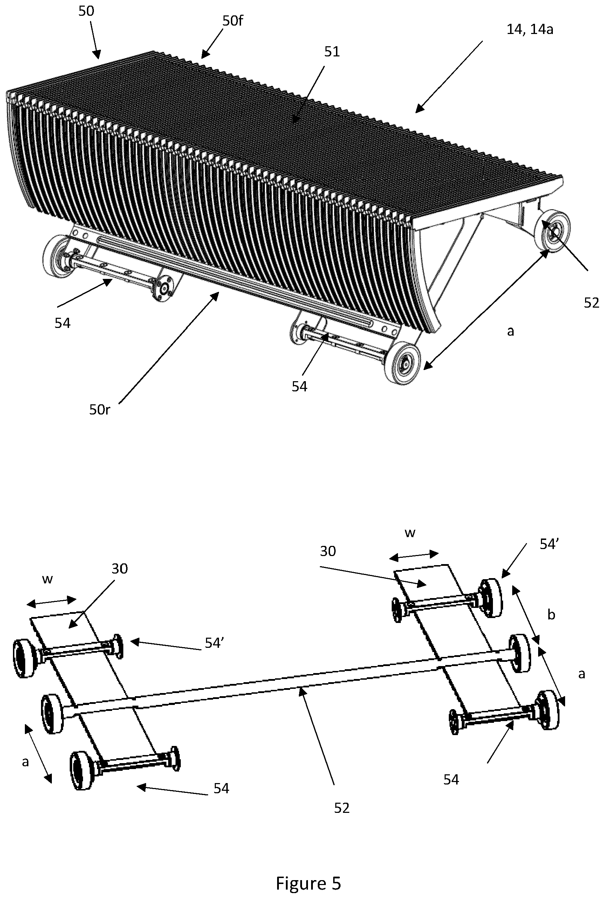

Figure 5 shows the front and rear horizontal members 52, 54 of the step 14a of Figure 4 (conveyance element 14) coupled to two drive belts 30 and 30. Each drive belt 30 has a belt width w. Two rear horizontal members 54' of another step 14a are also depicted, coupled to the drive belts 30 forward of the front horizontal element 52. The step body 50 is not represented in this figure to allow for easier understanding of how the steps 14a are coupled to the drive belts 30 and 30. It will be appreciated that the spacing a between the front horizontal members 52 and rear horizontal members 54 of a step 14a is defined by the geometry of the step body 50. The spacing b between the front horizontal members 52 of one step 14a and the rear horizontal members 54' of the second step 14a also defined by the geometry of the step body 50.

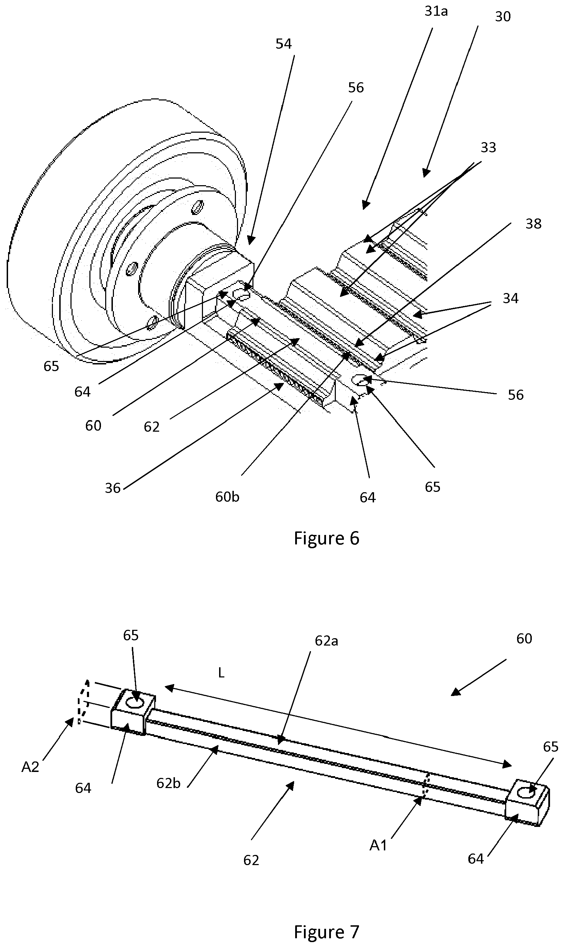

Figure 6 shows a view from the engagement surface 31a side of the drive belt 30, in which a recess 38 is shown extending completely across one tooth 33. The embedded cords 36 in the drive belt 30 extend across the entire width of the drive belt 30. An outer portion of the rear horizontal member 54 is shown. A support member 60 for coupling the drive belt 30 to rear horizontal member 54 is provided which includes an engagement portion 62 which fits within the recess 38 on the drive belt 30. The support member 60 includes a coupling portion 64 at either end of the engagement portion 62. Each coupling portion 64 includes a coupling element 65 which engages with a corresponding coupling element 56. In this example the coupling elements 65 on the support member 60 are through-holes. The corresponding coupling elements 56 are protrusions provided on the rear horizontal member 54, which have a form-fit engagement with the through holes (coupling elements 65).

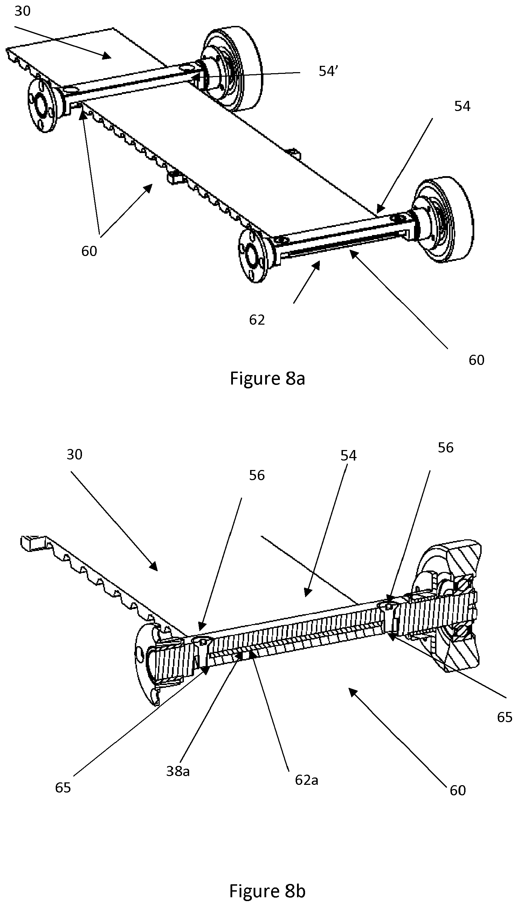

Figure 7 shows a support member 60 which can be used for coupling any horizontal member 52, 54 to a single drive belt 30. The support member 60 includes the single engagement portion 62, which has a cross sectional area A1 which is smaller than the cross-sectional area A2 of the two coupling portions 64, and a length L which corresponds to the drive belt width w. This means that when the engagement portion 62 is inserted into the recess 38, a contact surface 62a of the engagement portion 62 contacts an inner surface 38a (not visible in Figure 6, this can be seen in Figure 8b) of the recess 38. The drive belt 30 is secured between the coupling portions 64 thereby preventing unwanted lateral displacement of the drive belt 30. The cross-section of the engagement portion 62 corresponds to the cross-section of the recess 38 in the tooth 33 so that side walls 62b of the engagement portion 62 contact and engage with side walls of the recess 38.

Figure 8a is an alternative representation of the arrangement shown in Figure 5, in which the front horizontal member 52 is not shown. The rear horizontal members 54 and 54' from two adjacent steps 14a are coupled to the drive belt 30.

Figure 8b shows a partial view of Figure 5, with a cross section taken through a common centre line of the support member 60, the recess 38 and the rear horizontal member 54. From this cross-sectional view the contact between the contact surface 62a and the inner surface 38a of the recess 38 can be seen. The corresponding coupling elements 56 in this example are screws which pass through threaded holes in the rear horizontal member 54 and through threaded holes (i.e. coupling elements 65) in the support member 60.

It will be appreciated that whilst the coupling of one rear horizontal member 54 to the drive belt 30 is described in detail above, this is also applicable to the other rear member 54 and front horizontal member 52.

It will also be appreciated that any suitable arrangement of coupling elements 65 and corresponding coupling elements 56 can be used to secure the support member 60 to a horizontal member 52, 54.

In the example described above, the support member 60 extends across the entire width w of the drive belt 30 to which it is clamped. This means that structural support is provided to the drive belt 30 across its entire width and in particular to the tooth 33 in which the support member 60 is inserted.

The support member 60 is secured to the drive belt 30 by a clamping action provided on either side of the drive belt 30 by the coupling elements 65 engaging with the corresponding coupling elements 56. The drive belt 30 is held tightly against the horizontal member 52, 54 and restrained against lateral displacement. With this clamping arrangement, no through holes are required in the drive belt 30. Therefore, the cords 36 can be embedded across the entire width w of the drive belt 30. Therefore, the drive belt 30 has a smaller width than conventional drive belts which include cordless portions with through-holes in order to attach the conveyance elements. This is particularly advantageous for jointed drive belts.

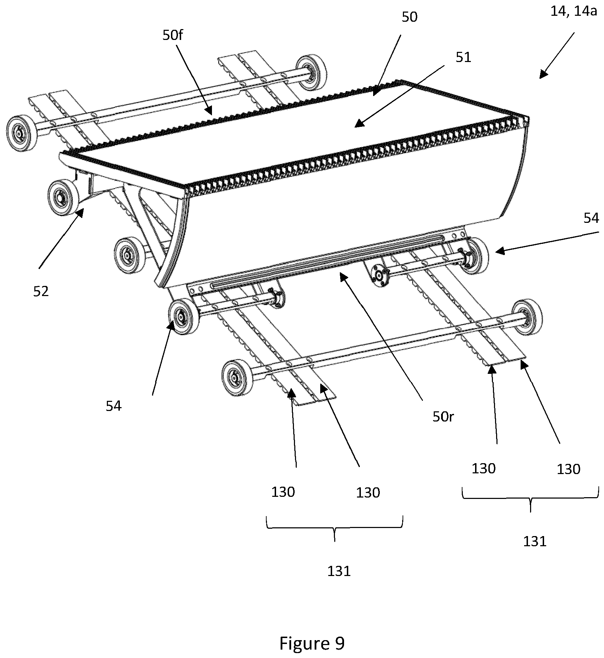

Figure 9 shows another example in which the step 14a (conveyance element 14) of Figure 4 is coupled to two drive strands 131. Each drive strand 131 comprises two drive belts 130.

Figure 10 shows a rear horizontal member 54 coupled to one drive strand 131. A support member 160 extends across both drive belts 130, clamping the rear horizontal member 54 to the two drive belts 130. The support member 160 include a central coupling portion 163 and two outer coupling portions 164. Three corresponding coupling elements 56 are provided.

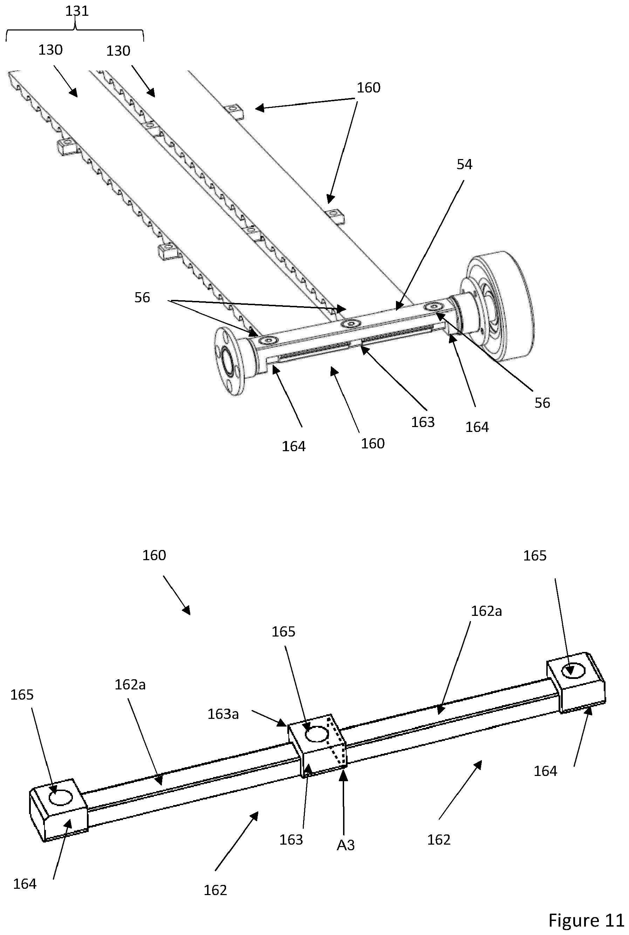

The support member 160 of Figure 10 is shown more clearly in Figure 11. The support member 160 includes two engagement portions 162, which fit within recesses 38 in the drive belts 130. An outer coupling portion 164 is provided at each end of the support member 160. Between the two engagement portions 162 is the central coupling portion 163. The central coupling portion 163 has a cross-sectional area A3 that is larger than the cross-sectional area (not shown) of the two engagement portions 162. When the support member 160 is fitted to the drive belts 130, a distal end 163a of the central coupling portion 163 is located between the drive belts 130 (which can be seen in Figure 10). This means that the two drive belts 130 are secured between the central coupling portion 163 and one of the outer coupling portions 164 thereby preventing unwanted lateral displacement of the drive belts 130. The central coupling portion 163 and the two outer coupling portions 164 comprise coupling elements 165.

Referring back to Figure 10, it can be seen that the support member 160 is clamped to the drive strand 131 by the engagement of the coupling elements 165 with the corresponding coupling elements 56.

As with the earlier example, the support member 160 extends across the width of the entire drive strand 131 to which it is clamped. Again with this clamping arrangement, no through holes are required in any of the drive belts 130. Therefore, the cords 36 can be embedded across the entire width w of each drive belt 130.

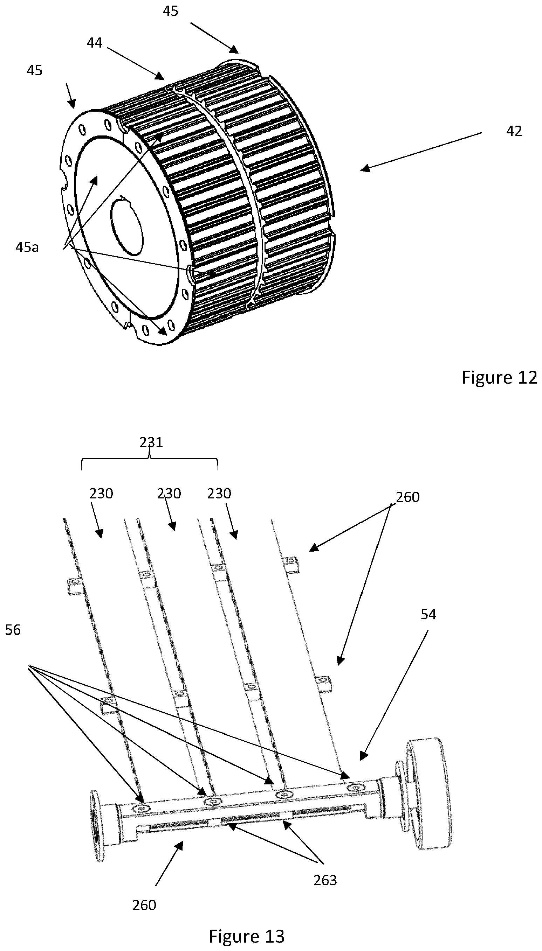

Figure 12 shows a drive pulley 42 which is configured to drive one of the drive strands 131 shown in Figure 9. The drive pulley 42 includes teeth 43 configured to engage with the teeth 33 on the two drive belts which make up each drive strand 131. A central groove 44 is provided, which receives the central coupling portion 163 of the support member 160. The drive pulley 42 comprises flanges 45 at each side, to ensure alignment of the drive strand 131 as it is driven by the drive pulley 42. Each flange 45 includes a plurality of notches 45a along its circumferential edge. The notches 45a receive the two outer coupling portions 164 of the support member 160.

It will be appreciated that a drive pulley configured for use with the example of Figure 5 (having a single drive belt) also includes notches in the flanges for receiving the coupling portions 164.

Figure 13 shows an example of a drive strand 231 comprising three drive belts 230. In this example, one of the rear horizontal members 54 is shown. However, it will be appreciated that the other horizontal members 52, 54 of a step 14a (conveyance element 14) may be coupled to the drive strand 231 in the same way. A support member 260 extends across the three drive belts 230, clamping the rear horizontal member 54 to all three drive belts 330. Three corresponding coupling elements 56 are provided to clamp the support member 260 to the drive belts 230.

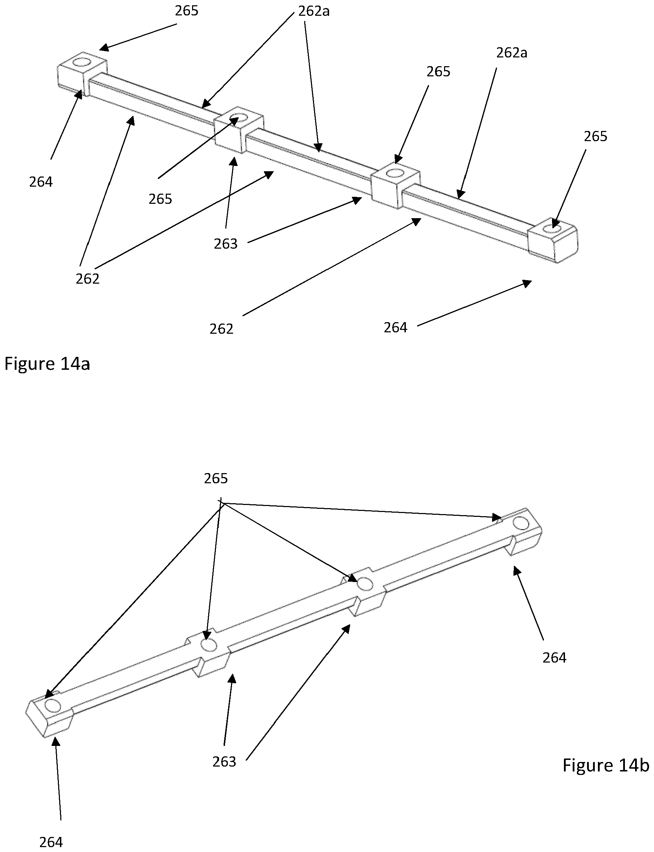

Figures 14a and 14b show one of the support members 260 of Figure 13. The support member 260 includes three engagement portions 262, which fit within recesses 38 in the drive belts 230. An outer coupling portion 264 is provided at each end of the support member 260. Between each pair of adjacent engagement portions 262 there is provided a central coupling portion 263. The central coupling portions 263 have a cross-sectional area A3 that is larger than the cross-sectional area A2 of the three engagement portions 262. When the support member 260 is fitted to the drive belts 230, a distal end of the central coupling portion 263 is located between the drive belts 230 (which can be seen in Figure 13). This means that each drive belt 230 is secured between the central coupling portion 263 and one of the outer coupling portions 264, or between two central coupling portions 263. This prevents unwanted lateral displacement of the drive belts 230. The two central coupling portions 263 and the two outer coupling portions 264 comprise coupling elements 265.

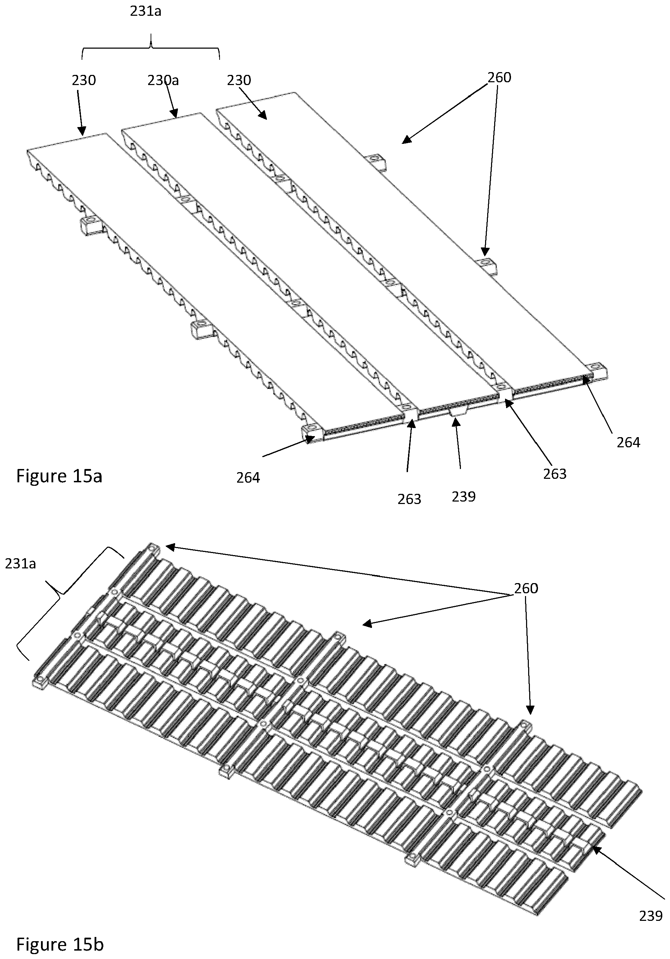

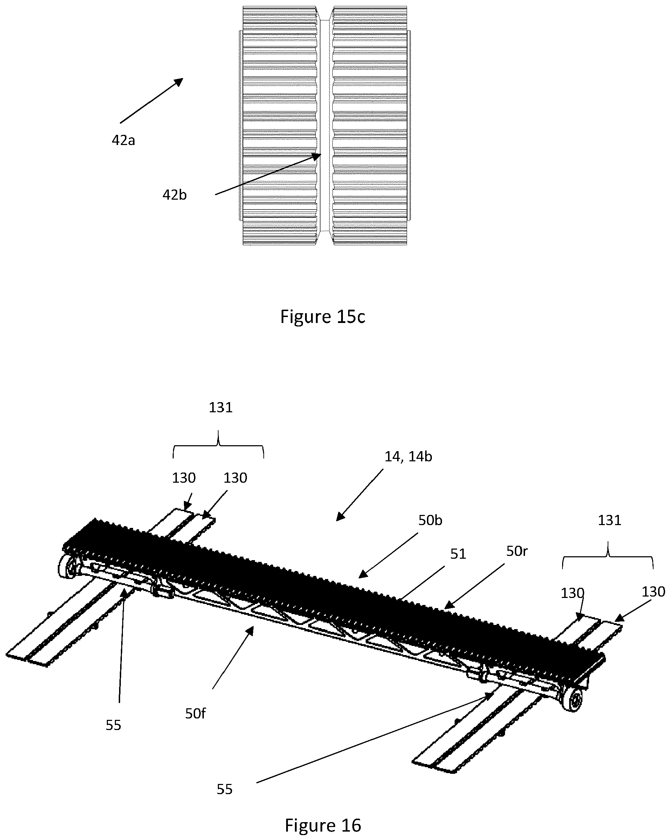

Figures 15a and 15b show another example of a drive strand 231a which also comprises three drive belts 230, 230, 230a. The two outer drive belts 230 are the same as described above. The central drive belt 230a is a liner track timing belt 230a which includes a central wedge 239. This drive strand 231a is used with a modified drive pulley 42a (shown in Figure 15c). The modified drive pulley 42a does not have flanges, but instead includes a circumferential guide track 42b. The linear track timing belt 230a aligns the drive strand 231a on the pulley due to the central wedge 239 being guided through the pulley circumferential guide track 42b. The support member 260 shown in Figures 14a and 14b and described above can be used with the drive strand 231a.

In the above example, a linear track timing belt is shown as the central drive belt in a drive strand comprising three drive belts. However, it will be appreciated that any of the drive belts in the examples described above or below may be a linear track timing belt. It will further be appreciated that, the drive pulley of the passenger conveyor is provided with one or more corresponding guide track(s) in accordance with the position of the or each linear track timing belt.

Figure 16 shows a conveyance element 14 in the form of a pallet 14b for a moving walkway 10b. The pallet 14b is coupled to a pair of drive strands 131. Each drive strand 131 includes two drive belts 130. The pallet 14b includes a pallet body 50b with a front end 50f and a rear end 50r. The pallet body 50b includes a passenger carrying surface 51. The pallet 14b includes two horizontal members 55 provided at the front end 50f of the pallet body 50b. The horizontal members 55 are coupled to the drive strands 131 with support members 160 (not visible in Figure 16) in the same way as the horizontal members 52, 54 of the escalator steps 14a are secured to the drive belts 130 in the examples above.

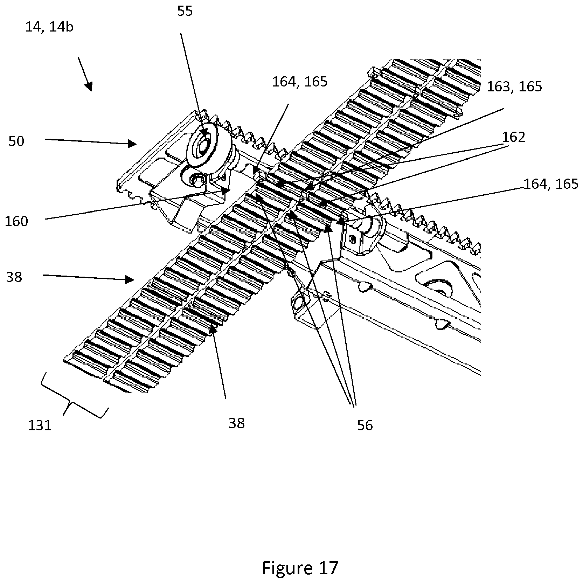

Figure 17 shows partial close-up views of Figure 16 looking from the engagement surface 31a of the drive belts 130. A support member 160 extends across the two drive belts 130 of the drive strand 131. The support member 160 has the configuration described above, i.e. the support member 160 includes two engagement portions 162, which fit within recesses 38 in the drive belts 130. The support member 160 has two outer coupling portions 164 and a central coupling portion 163, each having a coupling element 165 which engages with a corresponding coupling element 56. Two other recesses 38 can be seen in the drive belts 130, which are intended to receive two support members 160 coupled to a horizontal member 55 of another pallet 14b.

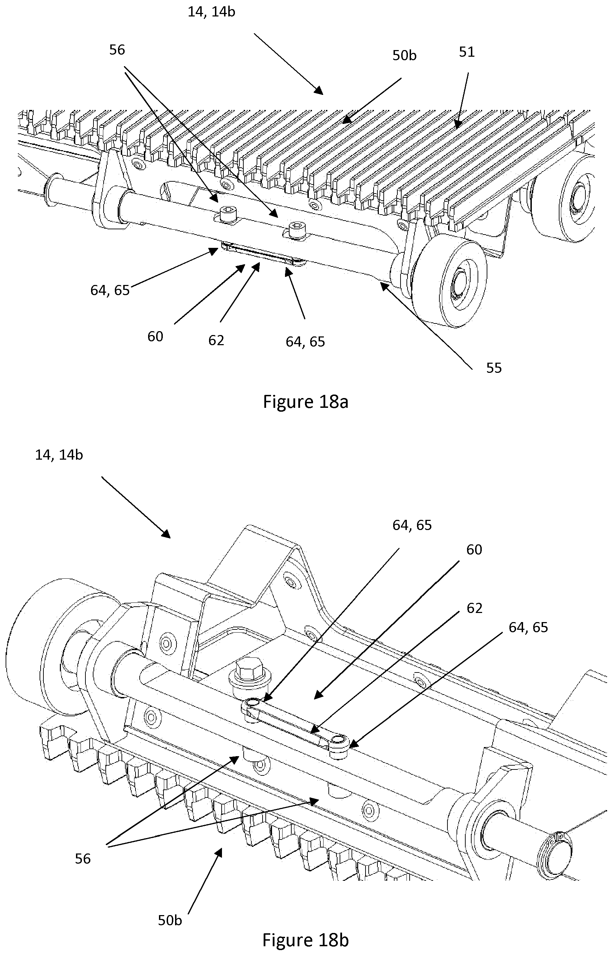

Figure 18a shows part of a conveyance element 14 in the form of pallet 14b for a moving walkway 10b. Figure 18b is a view from the underside of the pallet 14b. The pallet 14b includes a pallet body 50b with a passenger carrying surface 51. One of the horizontal members 55 is shown, coupled to a support member 60. The support member 60 has two coupling portions 64 and an engagement portion 62. The drive belt 30 is not shown in these figures. However, it will be appreciated that this arrangement is intended to couple the pallet body 50b to a single drive belt 30. Two coupling elements 65 on the support member 60 engage with corresponding coupling elements 56. The engagement portion 62 is configured for a form-fit engagement with a corresponding recess 38 on the drive belt 30. The engagement portion 62 has a trapezoidal cross-section.

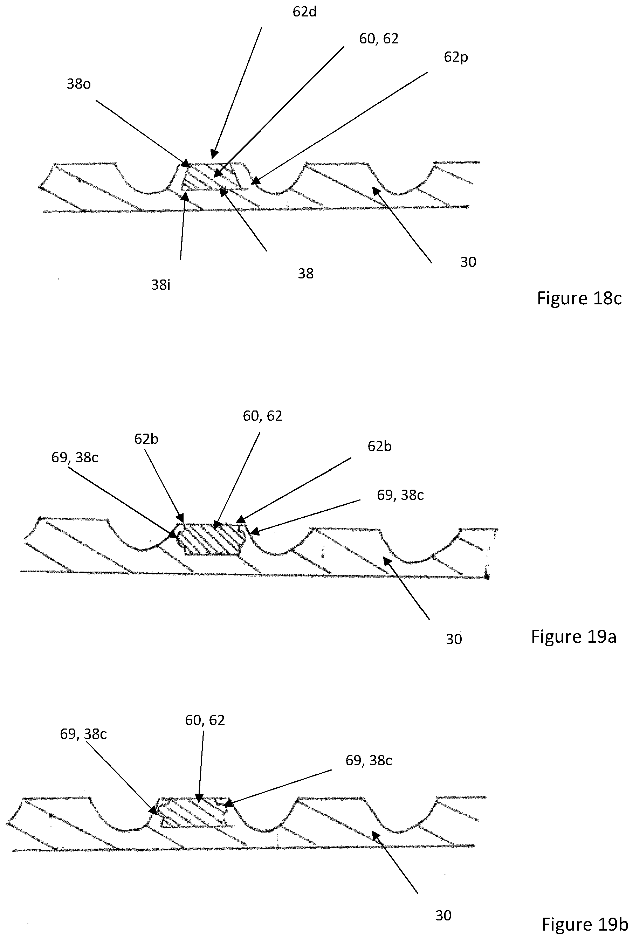

Figure 18c shows a cross sectional view of the support member 60 of Figures 18a and 18b inserted into the drive belt 30. A distal end of the engagement portion 62d is narrower than a proximal end 62p. The recess 38 is configured to receive the engagement portion 62 in a form-fitting manner. The recess 38 has an inner portion 38i which is wider than its outer portion 38o. In other words, the recess 38 is provided with an undercut.

Figure 19a shows an alternative form-fit configuration for a support member 60 and a drive belt 30, in which the engagement portion 62 has a rectangular cross section. A protrusion 69 is provided on each side wall 62b. The protrusions 69 fit within cavities 38c in the recess 38. The protrusions 69 extend along at least part of the engagement portion 62. The protrusions 69 may support members with different protrusions to be inserted.

Figures 19b shows another alternative form-fit configuration for a support member 60 and a drive belt 30. In this example, the engagement portion 62 has a trapezoidal cross-section, and a protrusion 69 is provided on each side wall 62b. The recess 38 is shaped in the same way as shown in Figure 18c, and additional includes cavities 38c for receiving the protrusions 69.

In all of the examples described above, the support member 60 is pushed into the recess 38, and due to the elasticity of the drive belt 30, the recess 38 deforms sufficiently for the engagement portion 62 to pass through.

It will be appreciated that all of the support members described above may be provided with form-fitting geometry on one or more of their engagement portions, and all of the drive belts described can be provided with recesses having corresponding form-fitting geometry.

In all of the above examples, the support member 60, 160, 260 is preferably made from Steel, Stainless Steel, Aluminium or any suitable metal or alloy.

While examples of the invention have been described, it is to be understood that aspects of the invention may include only some of the described examples. Accordingly, the invention is not to be seen as limited by the foregoing description, but is only limited by the scope of the appended claims.

## Claims

1. A support member (60, 160, 260) for a drive belt (30, 130, 230) of a passenger conveyor (10, 10a, 10b), comprising:
at least one engagement portion (62, 162, 262) having a length (L) substantially equal to the width (w) of the drive belt (30, 130, 230), and
a coupling element (65, 165, 265) provided at each end of the at least one engagement portion (62, 162, 262), each coupling element (65, 165, 265) configured to engage with a corresponding coupling element (56) of a conveyance element (14, 14a, 14b) of the passenger conveyor (10, 10a, 10b),
wherein the or each engagement portion (62, 162, 262) is configured to fit within a recess (38) of the drive belt (30, 130, 230),
wherein each coupling element (65, 165, 265) is provided in a coupling portion (64, 164, 163, 264, 263),
**characterised by** each coupling portion (64, 164, 163, 264, 263) having a cross-sectional area (A2, A3) that is larger than a cross-sectional area (A1) of the or each engagement portion (62, 162, 262).

2. The support member (60, 160, 260) according to claim 1, wherein the or each engagement portion (62, 162, 262) has a profile configured for a form-fit engagement with the respective recess (38).

3. The support member (160, 260) according to any preceding claim, comprising at least two engagement portions (162, 262), and wherein a coupling element (56) is provided between the engagement portions (162, 262).

4. A drive belt (30, 130, 230, 230a) for a passenger conveyor (10, 10a, 10b) comprising: a plurality of teeth (33) extending across a width (w) of the drive belt (30, 130, 230, 230a); at least one recess (38), wherein the or each recess (38) is provided in a tooth (33) extending across the entire width (w) of the drive belt (30, 130, 230, 230a),
wherein the or each recess (38) is configured to receive an engagement portion (62, 162, 262) of the support member (60, 160, 260) of any of claims 1 to 3.

5. The drive belt (30, 130, 230, 230a) according to claim 4, wherein each recess (38) has a profile which is configured to receive the engagement portion (62, 162, 262) in form-fit engagement.

6. The drive belt (30, 130, 230, 230a) according to claims 4 or 5, wherein the recesses (38) are evenly spaced along the length of the drive belt (30) or each drive belt (130, 230, 230a).

7. A passenger conveyor (10, 10a, 10b) comprising at least one drive belt (30, 130, 230, 230a) according to any of claims 4 to 6, and a plurality of support members (60, 160, 260) according to any of claims 1 to 3, wherein a conveyance element (14, 14a, 14b) is coupled to each support member (60, 160, 260) with each coupling element (65, 165, 265) engaging with a respective corresponding coupling element (56).

8. The passenger conveyor (10, 10a, 10b) according to claim 7, wherein each support member (60, 160, 260) is coupled to a horizontal member (52, 54, 55) of a conveyance element (14, 14a, 14b).

9. The passenger conveyor (10, 10a, 10b) according to any of claims 7 to 8, wherein the coupling elements (65, 165, 265) are screw threaded holes, and the corresponding coupling elements (56) are screws.

10. The passenger conveyor (10, 10a, 10b) according to any of claims 7 to 9, comprising two or more drive belts (130, 230, 230a), and a plurality of support members (160, 260) according to claim 3.

11. The passenger conveyor (10, 10a, 10b) according to any of claims 8 to 10, comprising two drive strands (131, 231, 231a), wherein each drive strand (131, 231, 231a) comprises two or more drive belts (130, 230, 230a).

12. The passenger conveyor (10, 10a, 10b) according to claim 10 or 11, wherein each drive belt (130, 230, 230a) is a jointed drive belt with a belt joint (39); and wherein the belt joints (39) of the two or more drive belts (130, 230, 230a) are offset from each other.

13. The passenger conveyor (10, 10a, 10b) according to any of claims 8 to 12, further comprising a drive pulley (42), where the drive pulley (42) includes at least one outer flange (45), the or each outer flange including a plurality of notches (45a) configured to engage, in use, with outer coupling portions (64, 164, 264) of the support members (60, 160, 260).

## Patentansprüche

1. Stützelement (60, 160, 260) für einen Antriebsriemen (30, 130, 230) eines Personenförderers (10, 10a, 10b), umfassend:
mindestens einen Eingriffsabschnitt (62, 162, 262) mit einer Länge (L), die im Wesentlichen gleich der Breite (w) des Antriebsriemens (30, 130, 230) ist, und
ein Kopplungselement (65, 165, 265), das an jedem Ende des mindestens einen Eingriffsabschnitts (62, 162, 262) vorgesehen ist, wobei jedes Kopplungselement (65, 165, 265) so konfiguriert ist, dass es mit einem entsprechenden Kopplungselement (56) eines Förderelements (14, 14a, 14b) des Personenförderers (10, 10a, 10b) in Eingriff kommt,
wobei der oder jeder Eingriffsabschnitt (62, 162, 262) so konfiguriert ist, dass er in eine Aussparung (38) des Antriebsriemens (30, 130, 230) passt,
wobei jedes Kopplungselement (65, 165, 265) in einem Kopplungsabschnitt (64, 164, 163, 264, 263) vorgesehen ist,
**dadurch gekennzeichnet, dass** jeder Kopplungsabschnitt (64, 164, 163, 264, 263) eine Querschnittsfläche (A2, A3) hat, die größer als eine Querschnittsfläche (A1) des oder jedes Eingriffsabschnitts (62, 162, 262) ist.

2. Stützelement (60, 160, 260) nach Anspruch 1, wobei der oder jeder Eingriffsabschnitt (62, 162, 262) ein Profil aufweist, das für einen formschlüssigen Eingriff mit der jeweiligen Aussparung (38) konfiguriert ist.

3. Stützelement (160, 260) nach einem der vorhergehenden Ansprüche, umfassend mindestens zwei Eingriffsabschnitte (162, 262), und wobei ein Kopplungselement (56) zwischen den Eingriffsabschnitten (162, 262) vorgesehen ist.

4. Antriebsriemen (30, 130, 230, 230a) für einen Personenförderer (10, 10a, 10b), umfassend:
eine Vielzahl von Zähnen (33), die sich über eine Breite (w) des Antriebsriemens (30, 130, 230, 230a) erstrecken;
mindestens eine Aussparung (38), wobei die oder jede Aussparung (38) in einem Zahn (33) vorgesehen ist, der sich über die gesamte Breite (w) des Antriebsriemens (30, 130, 230, 230a) erstreckt,
wobei die oder jede Aussparung (38) so konfiguriert ist, dass sie einen Eingriffsabschnitt (62, 162, 262) des Stützelements (60, 160, 260) nach einem der Ansprüche 1 bis 3 aufnimmt.

5. Antriebsriemen (30, 130, 230, 230a) nach Anspruch 4, wobei jede Aussparung (38) ein Profil aufweist, das so konfiguriert ist, dass es den Eingriffsabschnitt (62, 162, 262) formschlüssig aufnimmt.

6. Antriebsriemen (30, 130, 230, 230a) nach Anspruch 4 oder 5, wobei die Aussparungen (38) gleichmäßig entlang der Länge des Antriebsriemens (30) oder jedes Antriebsriemens (130, 230, 230a) beabstandet sind.

7. Personenförderer (10, 10a, 10b), umfassend mindestens einen Antriebsriemen (30, 130, 230, 230a) nach einem der Ansprüche 4 bis 6 und eine Vielzahl von Stützelementen (60, 160, 260) nach einem der Ansprüche 1 bis 3, wobei ein Förderelement (14, 14a, 14b) mit jedem Stützelement (60, 160, 260) gekoppelt ist, wobei jedes Kopplungselement (65, 165, 265) mit einem jeweiligen entsprechenden Kopplungselement (56) in Eingriff steht.

8. Personenförderer (10, 10a, 10b) nach Anspruch 7, wobei jedes Stützelement (60, 160, 260) mit einem horizontalen Element (52, 54, 55) eines Förderelements (14, 14a, 14b) gekoppelt ist.

9. Personenförderer (10, 10a, 10b) nach einem der Ansprüche 7 bis 8, wobei die Kopplungselemente (65, 165, 265) Schraubengewindelöcher sind und die entsprechenden Kopplungselemente (56) Schrauben sind.

10. Personenförderer (10, 10a, 10b) nach einem der Ansprüche 7 bis 9, umfassend zwei oder mehr Antriebsriemen (130, 230, 230a) und eine Vielzahl von Stützelementen (160, 260) nach Anspruch 3.

11. Personenförderer (10, 10a, 10b) nach einem der Ansprüche 8 bis 10, umfassend zwei Antriebsstränge (131, 231, 231a), wobei jeder Antriebsstrang (131, 231, 231a) zwei oder mehr Antriebsriemen (130, 230, 230a) umfasst.

12. Personenförderer (10, 10a, 10b) nach Anspruch 10 oder 11, wobei jeder Antriebsriemen (130, 230, 230a) ein Gelenkantriebsriemen mit einer Riemenverbindung (39) ist; und wobei die Riemenverbindungen (39) der zwei oder mehr Antriebsriemen (130, 230, 230a) gegeneinander versetzt sind.

13. Personenförderer (10, 10a, 10b) nach einem der Ansprüche 8 bis 12, der ferner eine Antriebsriemenscheibe (42) umfasst, wobei die Antriebsriemenscheibe (42) mindestens einen Außenflansch (45) aufweist, wobei der oder jeder Außenflansch eine Vielzahl von Kerben (45a) aufweist, die so konfiguriert sind, dass sie im Gebrauch mit den äußeren Kopplungsabschnitten (64, 164, 264) der Stützelemente (60, 160, 260) in Eingriff kommen.

## Revendications

1. Élément de support (60, 160, 260) d'une courroie d'entraînement (30, 130, 230) pour un transporteur de personnes (10, 10a, 10b), comprenant :
au moins une partie de mise en prise (62, 162, 262) ayant une longueur (L) sensiblement égale à la largeur (w) de la courroie d'entraînement (30, 130, 230), et
un élément de couplage (65, 165, 265) prévu à chaque extrémité de l'au moins une partie de mise en prise (62, 162, 262), chaque élément de couplage (65, 165, 265) étant configuré pour venir en prise avec un élément de couplage correspondant (56) d'un élément de transport (14, 14a, 14b) du transporteur de personnes (10, 10a, 10b),
dans lequel la ou chaque partie de mise en prise (62, 162, 262) est configurée pour s'ajuster dans un évidement (38) de la courroie d'entraînement (30, 130, 230),
dans lequel chaque élément de couplage (65, 165, 265) est prévu dans une partie de couplage (64, 164, 163, 264, 263),
**caractérisé en ce que** chaque partie de couplage (64, 164, 163, 264, 263) a une superficie de section transversale (A2, A3) qui est plus grande qu'une superficie de section transversale (A1) de la ou de chaque partie de mise en prise (62, 162, 262).

2. Élément de support (60, 160, 260) selon la revendication 1, dans lequel la ou chaque partie de mise en prise (62, 162, 262) a un profil configuré pour une mise en prise par complémentarité de forme avec l'évidement respectif (38).

3. Élément de support (160, 260) selon une quelconque revendication précédente, comprenant au moins deux parties de mise en prise (162, 262), et dans lequel un élément de couplage (56) est prévu entre les parties de mise en prise (162, 262).

4. Courroie d'entraînement (30, 130, 230, 230a) pour un transporteur de personnes (10, 10a, 10b) comprenant :
une pluralité de dents (33) s'étendant sur une largeur (w) de la courroie d'entraînement (30, 130, 230, 230a) ;
au moins un évidement (38), dans laquelle l'évidement ou chaque évidement (38) est prévu dans une dent (33) s'étendant sur toute la largeur (w) de la courroie d'entraînement (30, 130, 230, 230a),
dans laquelle le ou chaque évidement (38) est configuré pour recevoir une partie de mise en prise (62, 162, 262) de l'élément de support (60, 160, 260) selon l'une quelconque des revendications 1 à 3.

5. Courroie d'entraînement (30, 130, 230, 230a) selon la revendication 4, dans laquelle chaque évidement (38) a un profil qui est configuré pour recevoir la partie de mise en prise (62, 162, 262) en prise par complémentarité de forme.

6. Courroie d'entraînement (30, 130, 230, 230a) selon les revendications 4 ou 5, dans laquelle les évidements (38) sont régulièrement espacés sur la longueur de la courroie d'entraînement (30) ou de chaque courroie d'entraînement (130, 230, 230a).

7. Transporteur de personnes (10, 10a, 10b) comprenant au moins une courroie d'entraînement (30, 130, 230, 230a) selon l'une quelconque des revendications 4 à 6, et une pluralité d'éléments de support (60, 160, 260) selon l'une quelconque des revendications 1 à 3, dans lequel un élément de transport (14, 14a, 14b) est couplé à chaque élément de support (60, 160, 260) avec chaque élément de couplage (65, 165, 265) venant en prise avec un élément de couplage correspondant respectif (56).

8. Transporteur de personnes (10, 10a, 10b) selon la revendication 7, dans lequel chaque élément de support (60, 160, 260) est couplé à un élément horizontal (52, 54, 55) d'un élément de transport (14, 14a, 14b).

9. Transporteur de personnes (10, 10a, 10b) selon l'une quelconque des revendications 7 et 8, dans lequel les éléments de couplage (65, 165, 265) sont des trous de vis filetés et les éléments de couplage correspondants (56) sont des vis.

10. Transporteur de personnes (10, 10a, 10b) selon l'une quelconque des revendications 7 à 9, comprenant deux courroies d'entraînement ou plus (130, 230, 230a), et une pluralité d'éléments de support (160, 260) selon la revendication 3.

11. Transporteur de personnes (10, 10a, 10b) selon l'une quelconque des revendications 8 à 10, comprenant deux brins d'entraînement (131, 231, 231a), dans lequel chaque brin d'entraînement (131, 231, 231a) comprend deux courroies d'entraînement ou plus (130 , 230, 230a).

12. Transporteur de personnes (10, 10a, 10b) selon la revendication 10 ou 11, dans lequel chaque courroie d'entraînement (130, 230, 230a) est une courroie d'entraînement articulée avec un joint de courroie (39) ; et dans lequel les joints de courroie (39) des deux courroies d'entraînement ou plus (130, 230, 230a) sont décalés les uns par rapport aux autres.

13. Transporteur de personnes (10, 10a, 10b) selon l'une quelconque des revendications 8 à 12, comprenant en outre une poulie d'entraînement (42), la poulie d'entraînement (42) comportant au moins une bride extérieure (45), la ou chaque bride extérieure comportant une pluralité d'encoches (45a) configurées pour venir en prise, pendant l'utilisation, avec des parties de couplage extérieures (64, 164, 264) des éléments de support (60, 160, 260).
